# EUROPÄISCHE PATENTSCHRIFT

(11) **EP 1 565 647 B1**
(45) Veröffentlichungstag und Bekanntmachung des Hinweises auf die Patenterteilung: **12.10.2011**
(21) Anmeldenummer: 03753558.0
(22) Anmeldetag: 15.10.2003
(51) Int. Cl.: F02B 67/04, F16H 13/02, F02B 67/06

(54) **EINEM AGGREGATE-RIEMENTRIEB EINER BRENNKRAFTMASCHINE ZUGEORDNETES REIBRADGETRIEBE FÜR EIN GESONDERTES NEBENARGGREGAT**
FRICTION GEAR MECHANISM ASSOCIATED WITH A UNIT BELT DRIVE IN A COMBUSTION ENGINE FOR A SEPARATE ANCILLARY UNIT
ENGRENAGE A ROUE DE FRICTION ASSOCIE A UN MECANISME D'ENTRAINNEMENT PAR COURROIE, DESTINE AUX UNITES D'UN MOTEUR A COMBUSTION INTERNE ET A UNE UNITE AUXILIAIRE SEPAREE

(30) Priorität: 26.11.2002 DE 10255079
(43) Veröffentlichungstag der Anmeldung: 24.08.2005
(73) Patentinhaber: Bayerische Motoren Werke Aktiengesellschaft, 80809 München (DE); Peugeot Citroën Automobiles Société Anonyme, 78140 Velizy Villacoublay (FR)
(72) Erfinder: LEMBERGER, Heinz, 85774 Unterföhring (DE); WIMMER, Rudolf, A-4431 Haidershofen (AT)
(74) Vertreter: Beetz & Partner
(86) Internationale Anmeldenummer: PCT/EP2003/011407
(87) Internationale Veröffentlichungsnummer: WO 2004/048758

(56) Entgegenhaltungen:
- DE-A- 3 934 884
- DE-A- 4 039 207
- DE-C- 373 816
- FR-A- 2 439 337
- US-A- 2 823 546

## Beschreibung

Die Erfindung betrifft ein einem Aggregate-Riementrieb einer Brennkraftmaschine zugeordnetes Reibradgetriebe für ein gesondertes Nebenaggregat, wobei ein im Umschlingungsbereich eines Triebrades der Brennkraftmaschine oder eines sonstigen Aggregates mit der Außenseite eines Riemens reibschlüssig zusammenwirkendes Reibrad in Reibverbindung steht mit einem Antriebsrad des Reibradgetriebes des Nebenaggregates, wobei ferner das Reibrad mittels einer Steuereinrichtung bedarfsweise außer Eingriff mit einem der vorgenannten Reibpartner gesteuert ist.

Eine derartige Anordnung wurde in der nicht vorveröffentlichten Patentanmeldung P 102 36 746 in allgemeiner Ausgestaltung vorgeschlagen ohne Angabe einer konkreten Ausbildung der Steuereinrichtung zum bedarfsgerechten Verstetlen des Reibrades relativ zum Antriebsrad oder zum Riemen.

Aufgabe der Erfindung ist es, für das gesteuert verstellbare Reibrad zwischen einem für das Nebenaggregat wirksamen Eingriff und einer Nichteingriffs-Position eine im Aufbau einfache und betriebssichere Führung aufzuzeigen.

Diese Aufgabe ist mit dem Patentanspruch 1 dadurch gelöst, dass das Reibrad in einer maschinenseitig dem jeweiligen Triebrad oder Antriebsrad im jeweiligen Umschlingungsbereich des Riemens benachbart angeordneten Führungseinrichtung längs eines zur Drehachse des jeweiligen Trieb- oder Antriebsrades äquidistanten Kreisbogenabschnittes relativ zum Antriebsrad oder zur Riemenaußenseite im jeweiligen Umschlingungsbereich mittels der Steuereinrichtung für eine Zu- und Abschaltung des Nebenaggregates lageveränderbar abgeordnet ist.

Mit der Erfindung ist eine im Aufbau einfache und betriebssichere Führung für ein insbesondere riemenseitig angeordnetes Reibrad des dem Nebenaggregat zugeordneten Reibradgetriebes erzielt.

In einer ersten Ausgestaltung der Erfindung ist eine einfache und stabile Führungseinrichtung dadurch erzielt, dass diese beiderseits des Reibrades auf einen gegenseitig festen Abstand angeordnete Führungsplatten umfasst mit äquidistanten, kreisbogenförmigen Langlöchern, in denen das Reibrad über axiale Fortsätze gleitbeweglich geführt mittels der Steuereinrichtung verschiebbar angeordnet ist

Um durch einen maschinendynamisch bedingten unrunden Lauf des jeweiligen Trieb- oder Antriebsrades einschließlich der Riemenaußenseite ggf. ein Verklemmen des Reibrades in den Führungs-Langlöchern einerseits und einen erhöhten Verschleiß andererseits zu vermeiden, wird in weiterer Ausgestaltung der Erfindung vorgeschlagen, dass die Führungseinrichtung maschinenseitig federelastisch abgestützt angeordnet ist. Dies kann beispielsweise mittels einer silentblockartigen bzw. Gummi-Metall - Anordnung erzielt sein, die auch einem Toleranzausgleich dient.

Die für einen variablen Antrieb des Nebenaggregates möglichen Zustellungen des Reibrades beschreibt ein weiterer Vorschlag, wobei die Steuereinrichtung einen maschinenseitig angeordneten Servomotor umfasst zur Einwirkung auf einen Winkelhebel, der mit dem Reibrad über eine dem Zu - und Abschalten des Nebenaggregates dienende , entsprechend zugbelastete oder druckbelastete Koppelstange in Verbindung steht. Mit dieser Ausgestaltung kann die Steuereinrichtung den Platzverhältnissen an der Brennkraftmaschine entsprechend vorteilhaft angepasst angeordnet werden.

Zur Dämpfung von in die Koppelstange ggf. durch das Reibrad eingeleiteten Stößen in Richtung Servomotor ist erfindungsgemäß vorgesehen, dass die Koppelstange aus zwei miteinander teleskopierenden Abschnitten gebildet ist, die bei zugeschaltetem Nebenaggregat entsprechend der zug- oder druckbeaufschlagten Koppelstange gegeneinander federelastisch abgestützt sind.

Eine andere Ausgestaltung der Erfindung kennzeichnet sich dadurch, dass die Führungseinrichtung ein zur Drehachse des jeweiligen Trieb- oder Antriebsrades koaxial gelagerter, das Reibrad in äquidistanter Anordnung umfassender Führungslenker ist, der mit gummielastisch abgestützten Lagerbuchsen ausgerüstet ist. Dieser kann mit einer wie vorbeschrieben gestalteten Steuereinrichtung in Verbindung-stehen.

Die Erfindung findet bevorzugt Anwendung bei einem als Kühlmittelpumpe für eine Brennkraftmaschine dienenden Nebenaggregat, dessen Antriebsrad mit dem Reibrad über den von Parametern der Brennkraftmaschine mittels einer Motronic kennfeldgesteuerten Servomotor in Eingriff gesteuert und in Eingriff gehalten ist. Der Servomotor kann in bekannter Weise hydraulisch, pneumatisch, elektrisch oder magnetisch wirksam sein.
Der variable Antrieb der Kühlmittelpumpe kann im Rahmen der Erfindung beispielsweise auch durch lediglich einen einzigen Parameter gesteuert sein. Vorzugsweise dient hierfür die Temperatur des Kühlmittels der Brennkraftmaschine.

Die Erfindung ist anhand eines in der Zeichnung lediglich schematisch dargestellten Ausführungsbeispiels beschrieben.
Es zeigt:
- Fig.1: einen Riementrieb mit Reibradgetriebe für eine Kühlmittelpumpe mit zum Antrieb zu geschaltetem Reibrad,
- Fig.2: den oben genannten Riementrieb mit außer Eingriff gebrachtem Reibrad des Reibradgetriebes.

Einem Aggregate-Riementrieb 1 einer nicht näher gezeigten Brennkraftmaschine ist ein Reibradgetriebe 2 für ein gesondertes Nebenaggregat 3 zugeordnet. Das Reibradgetriebe 2 umfasst ein im Umschlingungsbereich eines Triebrades 4 der Brennkraftmaschine mit der Außenseite 1' eines Riemens 1" reibschlüssig zusammenwirkendes Reibrad 5, das bedarfsweise in Reibeingriff mit einem Antriebsrad 6 des Reibradgetriebes 2 des Nebenaggregates 3 mittels einer Steuereinrichtung 7 bringbar ist.

Zur Erzielung einer im Aufbau einfachen und betriebssicheren Führung des Reibrades 5 wird vorgeschlagen, dass das Reibrad 5 in einer maschinenseitig dem jeweiligen Triebrad 4 oder Antriebsrad 6 im jeweiligen Umschlingungsbereich des Riemens 1" benachbart angeordneten Führungseinrichtung 8 längs eines zur Drehachse 9 des jeweiligen Trieb - oder Antriebsrades 4 oder 6 äquidistanten Kreisbogenabschnittes - Langloch 10 - relativ zum Antriebsrad 6 oder zur Riemenaußenseite 1' mittels der Steuereinrichtung 7 für eine Zu - und Abschaltung des Nebenaggregates 3 lageveränderbar angeordnet ist.

In einer ersten, bevorzugten Ausführung umfasst die Führungseinrichtung 8 beiderseits des schaltbaren Reibrades 5 auf einem gegenseitig festen Abstand angeordnete Führungsplatten mit äquidistanten, kreisbogenförmigen Langlöchern 10, in denen das Reibrad 5 über axiale Fortsätze gleitbeweglich geführt mittels der Steuereinrichtung 7 verschiebbar angeordnet ist.

Zur Vermeidung von die Betriebssicherheit der Führungseinrichtung 8 gefährdenden Belastungen aus einem maschinendynamisch bedingten unrunden Lauf des Triebrades 4 oder des Antriebsrades 6 sowie des Riemens 1" ist die Führungseinrichtung 8 maschinenseitig federelastisch abgestützt angeordnet, beispielsweise über ein Gummi-Metall-Element.

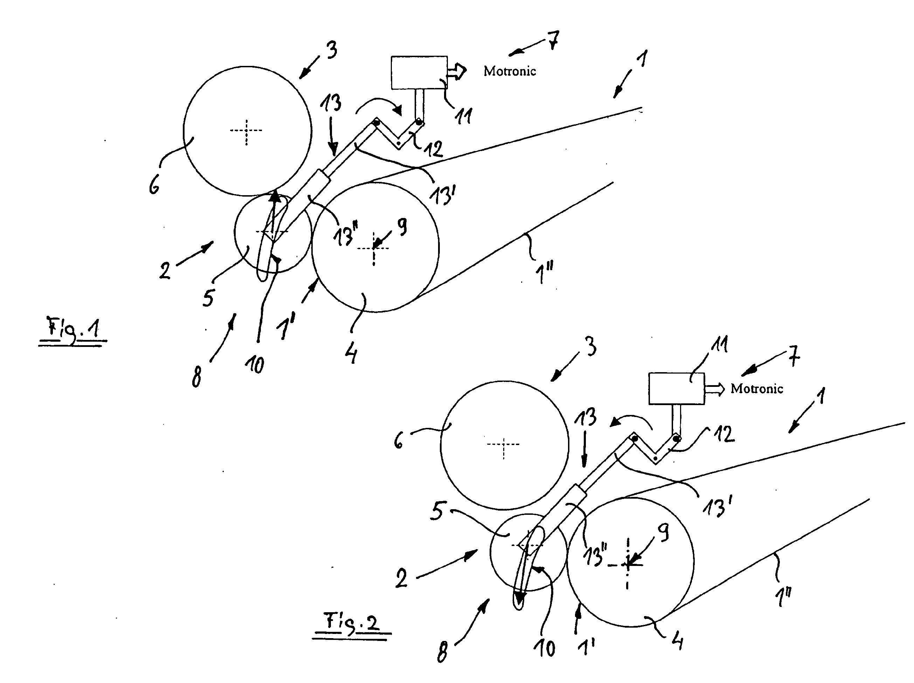

Wie aus den Figuren 1 und 2 ersichtlich, umfasst die Steuereinrichtung 7 einen maschinenseitig angeordneten Servomotor 11 zur Einwirkung auf einen Winkelhebel 12 , der mit dem Reibrad 5 über eine dem Zu - und Abschalten des Nebenaggregates 3 dienende, entsprechend zug - oder druckbelastete Koppelstange 13 in Verbindung steht.

Um weiter ungedämpfte Belastungen in Richtung Servomotor 11 im wesentlichen zu unterbinden, ist die Koppelstange 13 aus zwei miteinander teleskopierenden Abschnitten 13',13" gebildet, die bei zugeschaltetem Neben - aggregat 3 gegeneinander federelastisch abgestützt sind.

Wie die Figuren 1 und 2 ferner zeigen, ist das zum Triebrad 4 äquidistant über Langlöcher 10 geführt angeordnete Reibrad 5 in ständigem Reibeingriff mit der Außenseite 1' des Riemens1" mit dem Vorteil, dass das Riemenrad 5 beim gesteuert reibschlüssigen Eingriff mit dem Antriebsrad 6 des Nebenaggregates 3 eine der Geschwindigkeit des Riemens 1" entsprechende Drehzahl aufweist. Mit der gezeigten Anordnung sind demnach bei einer gesteuerten Zuschaltung des Nebenaggregates 3 lediglich dessen Antriebsrad 6 mit gekuppelten Rotationsteilen zu beschleunigen, wodurch verringerte Beschleunigungskräfte auftreten. Damit sind Verschleiß und Akustik reduziert. Des weiteren bleibt das ständig mitlaufende Reibrad 5 frei von Ablagerungen wie Schmutz, Wasser, Eis ect.

Die Erfindung findet vorzugsweise Anwendung bei einem als Kühlmittelpumpe der Brennkraftmaschine dienenden Nebenaggregat 3 , dessen Antriebsrad 6 mit dem Reibrad 5 über den von Parametern der Brennkraftmaschine mittels einer Motronic kennfeldgesteuerten Servomotor 11 in Eingriff gesteuert und gehalten ist. Die Betätigung des Servomotors 11 kann hydraulisch, pneumatisch, elektrisch oder magnetisch erfolgen.

Abschließend ist noch auf eine andere Ausführung einer Führungseinrichtung verwiesen, die ein zur Drehachse des jeweiligen Trieb - oder Antriebsrades koaxial gelagerter, das Reibrad in äquidistanter Anordnung umfassender Führungslenker ist, der mit gummielastisch abgestützten Lagerbuchsen ausgerüstet ist. Zur Steuerung dieses Führungslenkers kann die oben beschriebene Steuereinrichtung dienen.

Mit der Erfindung in den vorgenannten Ausführungsbeispielen kann bei einem vorzugsweise als Kühlmittelpumpe dienenden Nebenaggregat 3 dieses bei einem Kaltstart der Brennkraftmaschine abgeschaltet sein mit dem Vorteil einer schnelleren Erwärmung des Kühlmittels und reduzierter Leistung der Brennkraftmaschine.
Weiter kann die Kühlmittelpumpe 3 im Hochdrehzahlbereich der Brennkraftmaschine durch gesteuertes Entfernen des Reibrades 5 vom Antriebsrad 6 abgeschaltet sein, oder durch einen gesteuert intermittierenden Eingriff zeitweise angetrieben oder durch einen gesteuert schleifenden Eingriff mit reduzierter Drehzahl angetrieben werden.

Gegenüber einer elektrisch angetriebenen Kühlmittelpumpe ist die erfindungsgemäße Anordnung wesentlich kompakter, leichter und kostengünstiger.

Schließlich ist mit einer weiteren Ausgestaltung der Erfindung der Vorteil einer Ausfallsicherheit (failsafe) ohne zusätzlicher Energie dadurch erreicht, dass das Reibrad 5 über eine nicht gezeigte, vorgespannte Feder in Dauereingriff mit dem Antriebsrad 6 des Nebenaggregates 3 angeordnet ist, wobei im Bedarfsfall einer Antriebsunterbrechung im Reibradgetriebe 2 das riemenseitig angetrieben bleibende Reibrad 5 außer Eingriff mit dem Nebenaggregate - Antriebsrad 6 gesteuert ist. Hierbei wirkt die Steuereinrichtung 7 über die Koppelstange 13 mit Druck auf die Achse des Reibrades 5 gemäß dem ersten Ausführungsbeispiel oder auf den Führungslenker des nicht dargestellten zweiten Ausführungsbeispiels.

## Patentansprüche

1. Einem Aggregate - Riementrieb einer Brennkraftmaschine zugeordnetes Reibradgetriebe für ein gesondertes Nebenaggregat,
- wobei ein im Umschlingungsbereich eines Treibrades (4) der Brennkraftmaschine oder eines sonstigen Aggregates mit der Außenseite (1') eines Riemens (1 ") reibschlüssig zusammenwirkendes Reibrad (5) in Reibver - bindung steht mit einem Antriebsrad (6) des Reibradgetriebes (2) des Nebenaggregates (3), wobei
- ferner das Reibrad (5) mittels einer Steuereinrichtung (7) bedarfsweise außer Eingriff mit einem der Reibpartner (1', 6) gesteuert ist,
**dadurch gekennzeichnet,**
- **dass** das Reibrad (5) in einer maschinenseitig dem jeweiligen Triebrad (4) oder Antriebsrad (6) im jeweiligen Umschlingungsbereich des Riemens (1") benachbart angeordneten Führungseinrichtung (8) längs eines zur Dreh - achse (9) des jeweiligen Trieb - oder Antriebsrades (4,6) äquidistanten Kreisbogenabschnittes relativ zum Antriebsrad (6) oder zur Riemenaußenseite (1') im jeweiligen Umschlingungsbereich mittels der Steuereinrichtung (7) für eine Zu - und Abschaltung des Nebenaggregates (3) lageveränderbar angeordnet ist.

2. Riementrieb nach Anspruch 1, **dadurch gekennzeichnet,**
- **dass** die Führungseinrichtung (8) beiderseits des Reibrades (5) auf einen gegenseitig festen Abstand angeordnete Führungsplatten umfasst mit äquidistanten, kreisbogenförmigen Langlöchern (10), in denen
- das Reibrad (5) über axiale Fortsätze gleitbeweglich geführt mittels der Steuereinrichtung (7) verschiebbar angeordnet ist.

3. Riementrieb nach Anspruch 2, **dadurch gekennzeichnet,**
- **dass** die Führungseinrichtung (8) maschinenseitig federelastisch abgestützt ist.

4. Riementrieb nach den Ansprüchen 1 - 3, **dadurch gekennzeichnet,**
- **dass** die Steuereinrichtung (7) einen maschinenseitig angeordneten Servomotor (11) umfasst zur Einwirkung auf einen Winkelhebel (12), der
- mit dem Reibrad (5) über eine dem Zu - und Abschalten des Nebenaggregates (3) dienende und entsprechend zug - oder druckbelastete Koppelstange (13) in Verbindung steht.

5. Riementrieb nach Anspruch 4, **dadurch gekennzeichnet,**
- **dass** die Koppelstange (13) aus zwei miteinander teleskopierenden Abschnitten (13', 13") gebildet ist, die
- bei zugeschaltetem Nebenaggregat (3) gegeneinander federelastisch abgestützt sind.

6. Riementrieb nach den Ansprüchen 1 und 4, 5 , **dadurch gekennzeichnet,**
- **dass** die Führungseinrichtung ein zur Drehachse des jeweiligen Trieb - oder Antriebsrades koaxial gelagerter, das Reibrad in äquidistanter Anordnung umfassender Führungslenker ist, der
- mit gummielastisch abgestützten Lagerbuchsen ausgerüstet ist.

7. Riementrieb nach den Ansprüchen 2 -6, **dadurch gekennzeichnet,**
- **dass** das Nebenaggregat (3) eine der Brennkraftmaschine dienende Kühlmittelpumpe ist, deren
- Antriebsrad (6) mit dem Reibrad (5) über den von Parametern der Brennkraftmaschine mittels einer Motronic kennfeldgesteuerten Servomotor (11) in Eingriff gesteuert und ggf. in Eingriff gehalten ist, wobei
- der Servomotor (11) hydraulisch , pneumatisch , elektrisch oder magnetisch tätig ist

8. Riementrieb nach den Ansprüchen 1 - 7, **dadurch gekennzeichnet,**
- **dass** das Reibrad (5) über eine vorgespannte Feder in Dauereingriff mit dem Antriebsrad (6) des Nebenaggregates (3) angeordnet ist, und
- **dass** mittels der Steuereinrichtung (7) über eine druckbelastete Koppelstange (13) das Reibrad (5) bedarfsweise außer Eingriff gesteuert ist.

## Claims

1. A friction gear mechanism associated with a unit belt drive of an internal combustion engine, for a separate ancillary unit,
- wherein a friction gear (5), which co-operates frictionally in the contact area of a driving gear (4) of the internal combustion engine or other unit with the outer side (1') of a belt (1"), is in frictional connection with a drive gear (6) of the friction gear mechanism (2) of the ancillary unit (3), wherein
- also the friction gear (5) is controlled by means of a control device (7) if necessary out of engagement with one of the friction partners (1',6),
**characterised in**
- **that** the friction gear (5) is arranged in a guide device (8) which is disposed on the engine side adjacent the respective driving gear (4) or drive gear (6) in the respective contact area of the belt (1") along an arc section which is equidistant from the axis of rotation (9) of the respective driving or drive gear (4,6) relative to the drive gear (6) or to the belt outer side (1') in the respective contact area by means of the control device (7), and which is arranged so that its position can be changed so as to connect and disconnect the ancillary unit (3).

2. A belt drive according to Claim 1, **characterised in**
- **that** the guide device (8) comprises guide plates disposed on either side of the friction gear (5) at a mutually fixed distance apart, with equidistant arcuate slots (10) in which
- the friction gear (5) is arranged displaceably, guided to sliding movement via axial projections, by means of the control device (7).

3. A belt drive according to Claim 2, **characterised in**
- **that** the guide device (8) is supported in a resilient manner on the engine side.

4. A belt drive according to Claims 1 to 3, **characterised in**
- **that** the control device (7) comprises a servomotor (11) disposed on the engine side to act on an elbow lever (12) which
- is in communication with the friction gear (5) via a coupling rod (13) serving to connect and disconnect the ancillary unit (3) and correspondingly subjected to tension or pressure.

5. A belt drive according to Claim 4, **characterised in**
- **that** the coupling rod (13) is formed by two sections (13', 13") which can be telescoped together and which
- are supported in a resilient manner with respect to one another when the ancillary unit (3) is connected.

6. A belt drive according to Claims 1 and 4,5, **characterised in**
- **that** the guide device is a guide linkage which is mounted coaxially to the axis of rotation of the respective driving or drive gear and comprises the friction gear in an equidistant arrangement, and which
- is provided with bearing bushes supported in a rubber-elastic manner.

7. A belt drive according to Claims 2 to 6, **characterised in**
- **that** the ancillary unit (3) is a coolant pump serving the internal combustion engine, of which
- the drive gear (6) is controlled in engagement and optionally kept in engagement with the friction gear (5) via the performance data-controlled servomotor (11) by parameters of the internal combustion engine by means of a Motronic, wherein
- the servomotor (11) is actuated hydraulically, pneumatically, electrically or magnetically.

8. A belt drive according to Claims 1 to 7, **characterised in**
- **that** the friction gear (5) is disposed via a pretensioned spring in permanent engagement with the drive gear (6) of the ancillary unit, and
- **that** the friction gear (5) is, if necessary, controlled to be disengaged by means of the control device (7) via a pressure-loaded coupling rod (13).

## Revendications

1. Transmission à roue à friction pour une unité séparée, ladite transmission étant affectée à une unité d'entraînement à courroie d'un moteur à combustion interne,
- dans laquelle une roue à friction (5), coopérant par friction avec le côté extérieur (1') d'une courroie (1") dans la zone d'enveloppement d'une roue d'entraînement (4) du moteur à combustion interne ou d'une autre unité, est en relation de friction avec une roue d'entraînement (6) de la transmission à roue à friction (2) de l'unité secondaire (3), où
- la roue à friction (5) est en outre commandée au moyen d'un dispositif de commande (7) pour être, à la demande, mise hors prise avec l'un des partenaires de friction (1', 6),
**caractérisée en ce que**
- la roue à friction (5) est disposée dans un système de guidage (8), placé au voisinage de la roue d'entraînement (4) ou roue d'entraînement (6) respective du côté machine dans la zone respective d'enveloppement de la courroie (1"), de manière à pouvoir être changée de position le long d'une portion en arc de cercle, équidistante à l'axe de rotation (9) de la roue d'entraînement (4, 6) respective, par rapport à la roue d'entraînement (6) ou du côté extérieur à la courroie (1') dans la zone d'enveloppement respective au moyen du dispositif de commande (7) pour un allumage et un arrêt de l'unité secondaire (3).

2. Entraînement à courroie selon la revendication 1, **caractérisé en ce que**
- le système de guidage (8) comprend des plaques de guidage qui sont disposées de chaque côté de la roue à friction (5) à une distance réciproquement fixe et des trous oblongs (10) en forme d'arc de cercle et équidistants, dans lesquelles
- la roue à friction (5) est disposée de manière à pouvoir être coulissée au moyen du dispositif de commande (7), conduite dans un mouvement de glissement sur des avancées axiales.

3. Entraînement à courroie selon la revendication 2, **caractérisé en ce que** le système de guidage (8) est supporté avec une élasticité de ressort du côté machine.

4. Entraînement à courroie selon les revendications 1 à 3, **caractérisé en ce que**
- le dispositif de commande (7) comprend un servomoteur (11) disposé du côté machine pour l'action sur un levier coudé (12) qui
- est en relation avec la roue à friction (5) par le biais d'une biellette (13) qui sert à allumer et à arrêter l'unité secondaire (3) et est contrainte de manière correspondante en traction ou en pression.

5. Entraînement à courroie selon la revendication 4, **caractérisé en ce que**
- la biellette (13) est constituée de deux sections (13', 13") se télescopant, qui
- sont supportées avec une élasticité de ressort agissant l'une contre l'autre quand l'unité secondaire (3) est allumée.

6. Entraînement à courroie selon les revendications 1 et 4, 5, **caractérisé en ce que**
- le système de guidage est un bras de guidage situé coaxialement par rapport à l'axe de rotation de la roue d'entraînement respective et comprenant la roue à friction en une disposition équidistante, lequel système de guidage
- est équipé de coussinets qui sont supportés avec une élasticité de caoutchouc.

7. Entraînement à courroie selon les revendications 2 à 6, **caractérisé en ce que**
- l'unité secondaire (3) est une pompe de liquide de refroidissement pour un moteur à combustion interne, dont
- la roue d'entraînement (6) est mise en prise ou le cas échéant maintenue en prise avec la roue à friction (5) par le biais du servomoteur (11) par commande en fonction de paramètres du moteur à combustion interne selon un champ de caractéristiques enregistrées dans l'électronique du moteur, où
- le servomoteur (11) est actionné par voie hydraulique, pneumatique, électrique ou magnétique.

8. Entraînement à courroie selon les revendications 1 à 7, **caractérisé en ce que**
- la roue à friction (5) est disposée de manière à être en prise durable avec la roue d'entraînement (6) de l'unité secondaire (3) par le biais d'un ressort précontraint, et
- la roue à friction (5) est mise hors prise, à la demande, au moyen du dispositif de commande (7) par le biais d'une biellette (13) contrainte par une pression.
